# EUROPÄISCHE PATENTANMELDUNG

(11) **EP 2 338 324 A1**
(43) Veröffentlichungstag der Anmeldung: **29.06.2011**
(21) Anmeldenummer: 10015922.7
(22) Anmeldetag: 22.12.2010
(51) Int. Cl.: A01F 25/16

(54) **Vorrichtung zur Befestigung einer Siloabdeckung und Verfahren zur Siloabdeckung**

(30) Priorität: 22.12.2009 DE 102009060394
(71) Anmelder: Schlittmeier, Ludwig, 84166 Adlkofen (DE)
(72) Erfinder: Schlittmeier, Ludwig, 84166 Adlkofen (DE)

(57) **Zusammenfassung**

Die Erfindung betrifft Vorrichtung zur Befestigung einer Siloabdeckung (3), insbesondere einer Siloplane, umfassend mindestens zwei Andrückelemente (4), die entlang von zwei einander gegenüberliegenden Längswänden (21) eines Fahrsilos (2) angebracht und auf einen Rand der Siloplane gespannt sind, jeweils umfassend seriell zueinander angeordnet ein Seil (41), eine Feder (42) und eine Spannvorrichtung (44), die dazu vorgesehen sind, die Siloplane randseitig auf eine darunter liegende Silage (1) zu drücken. Weiterhin ist ein Verfahren zur Abdeckung von Silage (1) in einem Fahrsilo (2) angegeben.

## Beschreibung

Die vorliegende Erfindung betrifft eine Vorrichtung zur Befestigung einer Siloabdeckung in einem Fahrsilo, insbesondere einer Siloplane, und ein Verfahren zur Siloabdeckung in einem Fahrsilo.

Siloplanen werden herkömmlich mittels Sandsäcken randseitig auf die Silage gedrückt. Das Auflegen der Sandsäcke ist mit schwerer körperlicher Arbeit und großem Zeitaufwand verbunden. Zudem müssen zur Entnahme der Silage die Sandsäcke von der Plane zumindest teilweise vorübergehend entfernt werden, was ebenfalls mit hohem Arbeitsaufwand verbunden ist.

In der US-Patentschrift 4,084,358 ist eine Abdeckung für einen Getreidebehälter beschrieben, bei der eine Plane mittels eines seitlich zwischen dem Rand der Plane und einem am Behälter befindlichen Halteseil Zick-Zack umlaufenden Spannseils über das Getreide gespannt ist.

Aus der US-Patentschrift 1,114,755 ist eine Abdeckung für einen Heuhaufen beschrieben, bei der Abdeckplatten mittels Ketten und Gewichten auf dem Heuhaufen fixiert werden.

Der vorliegenden Erfindung liegt die Aufgabe zugrunde, einen Andrückmechanismus für eine Siloabdeckung in einem Fahrsilo bereitzustellen, bei dem das Öffnen und Verschließen der Siloabdeckung mit geringerem Arbeitsaufwand verbunden ist. Weiterhin soll ein vereinfachtes Verfahren zur Siloabdeckung angegeben werden.

Diese Aufgabe wird durch eine Vorrichtung gemäß Patentanspruch 1 und durch ein Verfahren gemäß Patentanspruch 5 gelöst. Vorteilhafte Ausgestaltungen und Weiterbildungen sind Gegenstand der Patentansprüche 2 bis 4 und 6.

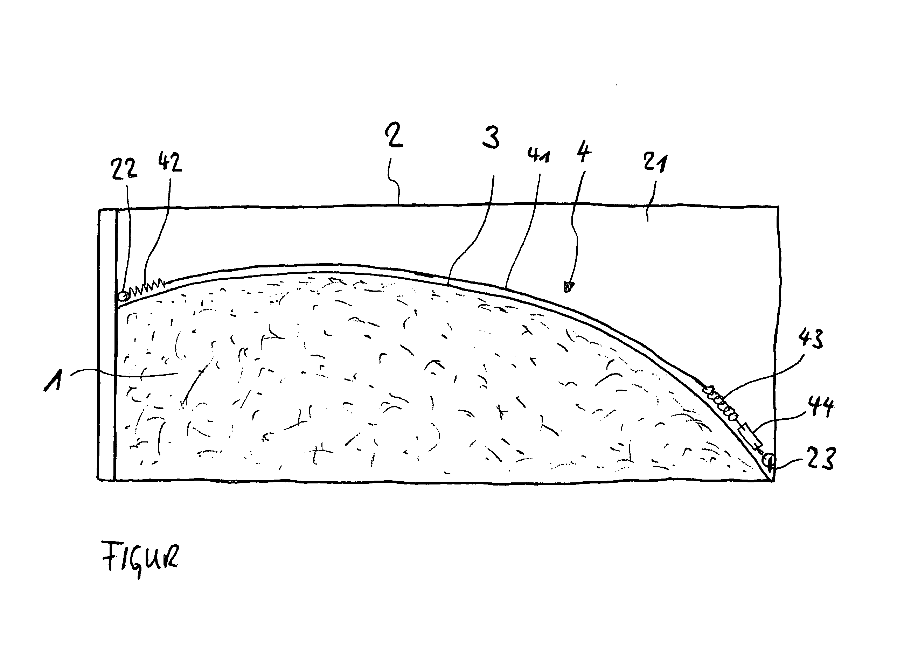

Die Erfindung wird im Folgenden anhand eines Ausführungsbeispiels in Verbindung mit der Figur näher erläutert.

Die Figur zeigt eine schematische Schnittdarstellung eines herkömmlichen Fahrsilos mit einer erfindungsgemäßen Vorrichtung.

Bei dem Ausführungsbeispiel befindet sich die abzudeckende Silage 1 in einem herkömmlichen Fahrsilo 2. Die Silage 1 ist mit einer herkömmlichen Siloplane 3 abgedeckt. Entlang der beiden einander gegenüberliegenden Längswände 21 des Fahrsilos 2 ist jeweils eine Andrückeinrichtung 4 angebracht, die auf einen Rand der Siloplane 3 gespannt ist. Eine solche Andrückeinrichtung 4 besteht aus einem Spannseil 41, an dessen einem Ende eine Stahlfeder 42 und an dessen anderem Ende eine Stahlkette 43 und ein Spannschloss 44 angebracht ist.

Das Spannseil 41 ist mit einem PU-Schlauch ummantelt, um die Siloplane vor mechanischer Beschädigung zu schützen.

Am jeweiligen rückseitigen Ende der Innenseiten der beiden Längswände 21 des Fahrsilos 2 ist jeweils mindestens ein Befestigungshaken oder -ring 22 angebracht, in den jeweils die Stahlfeder 42 der zugeordneten Andrückeinrichtung 4 eingehängt ist.

Am jeweiligen vorderseitigen Ende der Innenseiten der beiden Längswände 21 des Fahrsilos ist jeweils mindestens ein Befestigungshaken oder -ring 23 angebracht, in den jeweils das Spannschloss 44 der zugeordneten Andrückeinrichtung 4 eingehängt ist.

Die beiden Spannseile 41 sind jeweils vermittels des zugehörigen Spannschlosses 44 derart auf den darunterliegenden Rand der Siloplane 3 gespannt, dass am jeweiligen Rand der Siloplane 3 ein hinreichend luftdichter Abschluss hergestellt wird.

Gegenüber der herkömmlichen Methode mit Sandsäcken gestaltet sich das Abdecken der Silage in einem Fahrsilo mittels der erfindungsgemäßen Vorrichtung deutlich vereinfacht.

Nach Befüllen des Fahrsilos 2 mit Silage 1 wird die Siloplane 3 auf die Silage 1 gelegt. Danach werden die beiden Andrückeinrichtungen 4 an den Innenseiten der beiden Längswände 21 zwischen die dort vorder- und rückseitig angebrachten Befestigungshaken oder -ringe 22,23 gespannt und mittels der Spannschlösser 44 derart gespannt, dass die Spannseile 41 so in den jeweilig darunterliegenden Rand der Siloplane 3 gedrückt werden, dass ein hinreichend luftdichter Abschluss des Silos entsteht.

## Patentansprüche

1. Vorrichtung zur Befestigung einer Siloabdeckung (3), insbesondere einer Siloplane, umfassend mindestens zwei Andrückelemente (4), die entlang von zwei einander gegenüberliegenden Längswänden (21) eines Fahrsilos (2) angebracht und auf einen Rand der Siloplane gespannt sind, jeweils umfassend seriell zueinander angeordnet ein Seil (41), eine Feder (42) und eine Spannvorrichtung (44), die dazu vorgesehen sind, die Siloplane randseitig auf eine darunter liegende Silage (1) zu drücken.

2. Vorrichtung nach Anspruch 1, bei der die Seile (41) kunststoffummantelt sind.

3. Vorrichtung nach Anspruch 2, bei der die Seile (41) mittels PU-Schlauch ummantelt sind.

4. Vorrichtung nach einem der Ansprüche 1 bis 3, bei der jeweils zwischen Seil (41) und Spannvorrichtung (44) eine Kette (43) angordnet ist.

5. Verfahren zur Abdeckung von Silage (1) in einem Fahrsilo (2), bei dem eine Siloabdeckung (3) mittels mindestens zweier entlang von einander gegenüberliegenden Längswänden (21) des Fahrsilos (2) auf einem Rand der Siloplane (3) angeordneten Spannseilen (41,42,44) über die Silage (1) gespannt wird.

6. Verfahren nach Anspruch 5, bei dem eine Vorrichtung gemäß einem der Ansprüche 1 bis 4 verwendet wird.
